# EUROPEAN PATENT APPLICATION

(11) **EP 2 148 228 A1**
(43) Date of publication of application: **27.01.2010**
(21) Application number: 08160887.9
(22) Date of filing: 22.07.2008
(51) Int. Cl.: G02B 6/255

(54) **Method for operating an apparatus for connecting optical waveguides and apparatus**

(71) Applicant: CCS Technology, Inc., Wilmington, DE 19803 (US)
(72) Inventor: Heidler, Christian, 80337 München (DE)
(74) Representative: Epping - Hermann - Fischer

(57) **Abstract**

A method for operating an apparatus for connecting optical waveguides (100) comprises preventing the apparatus to connect optical waveguides in response to a determination of a first state of contamination of an optical system and outputting an information signal in response to a determination of a second state of contamination, the second state representing less contamination than the first state.

## Description

The present invention relates to a method for operating an apparatus for connecting optical waveguides and an apparatus for connecting optical waveguides.

Optical waveguides may include a core and a cladding surrounding the core, the core and the cladding having different refractive indices so that an optical signal is guided through the core. In order to connect two optical waveguides with each other, which includes, for example, connecting waveguides from different cables and connecting an optical waveguide to another piece of optical waveguide comprised in a connector or a terminator, the optical waveguide end material may be heated so that the optical waveguide ends melt together and form one single continuous optical light waveguide. A usual task of fusion splice equipment includes the determination of the position of the optical waveguides. In order to observe the ends of the waveguides a picture of the waveguide ends may be recorded. An optical system of the splice equipment may contaminate during operation so that the determination of the position of the waveguides may be inaccurate so that the attenuation of a spliced region may suffer due to the contamination of the optical system in the splice equipment.

It is an object of the invention to provide a method of operating an apparatus for connecting optical waveguides and an apparatus to be used in the method which operate reliable.

According to an embodiment of the present invention, a method of operating an apparatus for connecting optical waveguides comprises preventing the apparatus from connecting optical waveguides in response to a determination of a first state of contamination of an optical system. The method further comprises outputting an information signal in response to a determination of a second state of contamination, the second state representing less contamination than the first state.

The method may comprise adjusting a brightness of a light source, the light source coupled optically to the optical system. The method can further comprise detecting light which passes through the optical system, determining a brightness of the detected light and comparing the adjusted brightness with the determined brightness of the detected light to determine a transmittance through the optical system.

The method may comprise accumulating the operation time of the light source and determining the transmittance in dependence on the operating time.

The method may comprise recording a picture and comparing the picture with a reference picture to detect the state of contamination of the optical system. At least one method of image processing may be used to compare the picture with the reference picture. A gradient of a grey scale edge of the picture can be compared with a gradient of a grey scale edge determined from the reference picture. The method can comprise comparing a distribution of the light intensity of the picture with a distribution of the light intensity determined from the reference picture. The picture can be analysed to recognize elements shown by the picture caused by contamination of the optical system.

The method can comprise determining a third state of contamination, the third state of contamination representing contamination of a clean optical system. The method may comprise determining the second state of contamination of the optical system in dependence on the third state.

The method further comprises inserting respective ends of a first optical waveguide and a second optical waveguide into the apparatus, determining a core and/or a cladding of the respective waveguide ends, positioning the waveguides ends in response to the determination and fusion splicing the waveguide ends, when the detected state of contamination is better than the first state of contamination.

An apparatus for connecting optical waveguides is configured to execute said method. The apparatus can comprise a light source, the light source electronically coupled with a compare unit, the compare unit configured to compare at least one determined state of contamination with at least one given reference value, the at least one reference value representing a further state of contamination.

The apparatus can comprise a sensor to detect light, the sensor coupled optically with the light source and the sensor coupled electronically with the compare unit. The apparatus can further comprise an optical system arranged between the sensor and the light source, the optical system at least partly removable to clean or substitute it.

The apparatus can comprise a control unit electronically coupled with the compare unit. The control unit can be configured to output a signal which represents an adjusted brightness of the light source, said signal controlling the light source. The sensor may be an image sensor.

The apparatus further comprises positioning elements to position respective ends of a first optical waveguide and a second optical waveguide, a heating device to heat the optical waveguide and the control unit being configured to determine the position of the core and/or the cladding of at least one of the optical waveguides.

Herein below the embodiments of the invention will be described in more detail in conjunction with the appended drawings.
- Figure 1: shows a splice equipment apparatus for connecting waveguides by fusion splicing.
- Figure 2: shows a graph depicting transmittance in dependence on adjusted brightness.
- Figure 3: shows a flow chart of a method.

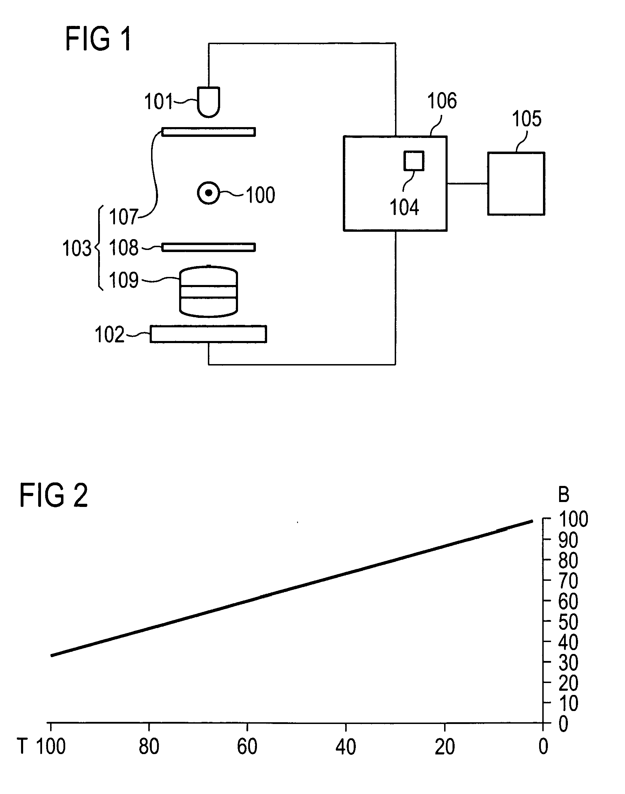

In Figure 1 relevant parts of an apparatus for connecting optical waveguides are schematically shown. The apparatus comprises a light source 101 to illuminate an optical waveguide 100. The light of the light source passes through an optical system 103. The optical system comprises two protection plates 107, 108 and a lens 109. The light passing through the optical system is detected by a sensor 102. The light source and the sensor are electrically coupled to a control unit 106. The control unit is configured to control the operation of the elements of the splice apparatus. The control unit 106 comprises a compare unit 104 to which the sensor and the light source can be coupled. The compare unit is part of the control unit 106. The apparatus further comprises an information unit 105 which is coupled to the control unit 106.

The optical waveguide 100 may be disposed in positioning elements (not shown). The positioning elements are movable to position the waveguide and preferably align it with another optical waveguide for an optimized splice connection. The apparatus may comprise a heating device (not shown) to heat the optical waveguides so that the waveguide ends melt together. The heating device may comprise two electrodes to generate a glow discharge.

The sensor 102 is configured to detect light and to determine the brightness of the detected light. Light includes electromagnetic waves which include visible light, radio, gamma, X-ray and ultraviolet spectrum and others, all involving the propagation of electric and magnetic fields through space. In another embodiment the sensor 102 is provided for recording an image of the optical waveguide. The sensor may be part of a camera. The sensor may be a CCD array and may contain electronic circuitry for reading the image taken with the CCD array. The control unit which may be a microprocessor evaluates the image taken by the sensor and forwards control information to the positioning elements. To record a picture which can be evaluated by the control unit the light source illuminates the optical waveguide. The light source may be a light emitting diode.

To protect the light source 101 the protection plate 107 is arranged between the light source and the optical waveguide. The protection plate protects the light source against dust or parts of the waveguide ends. The protection plate 107 may be of a glass material. The glass material may comprise silica or doped silica. In another embodiment the protection plate 107 may be of a synthetic transparent material.

To focus the light on the sensor 102 the lens 109 is arranged between the light source 101 and the sensor 102. The protection plate 108 is arranged between the waveguide 100 and the lens 109 to protect the lens 109 and the sensor 102. The protection plate 108 may be of a glass material. The glass material may comprise silica or doped silica. In another embodiment the protection plate 108 may be of a synthetic transparent material.

The protection plates 107 and 108 may contaminate during operation of the apparatus. Since the sensor needs a certain amount of light to record a satisfying picture, the brightness of the light source 101 is controlled by the control unit 106 in dependence on a determined brightness of the light detected by the sensor. The light source 101 is controlled in dependence on the determined brightness such that the sensor is irradiated by a constant brightness.

When the sensor detects less light than required, the control unit controls the light source such that the brightness of the light source increases. For example the voltage supplied to the light emitting diode may be increased. At a predefined first state of contamination of the optical system a connection of optical waveguides is no longer possible since not enough light can pass through the optical system. At this state of contamination or a state of worse contamination the sensor does not detect enough light to record a satisfying picture of the waveguide ends. In determination of a state of contamination equal or worse than the first state of contamination, performing of a splice operation may be inhibited.

In response to a determination of a second state of contamination, the second state representing less contamination than the first state, the apparatus can output an information signal. The thus generated information signal outputted upon a determination of the second state of contamination may be interpreted by the user that the contamination of the optical system is increasing. The information signal may be displayed on a screen of the apparatus or indicated with an optical signal for example generated by a light emitting diode. The screen may also display the picture of the waveguide and/or several system configurations. The information may be displayed on the screen as a text or as a symbol that indicates that a state of contamination equal or worse than the second state of contamination is reached. The information can also be outputted by an audio signal. The user is informed that the optical system becomes increasingly contaminated while fusion splicing is still possible, however, that it is supposed that connecting optical waveguides will not be possible due to contamination of the optical system within one or more of the next intended splicing processes.

The control unit 106 outputs the information signal in response to a determination of a state of contamination when connecting the waveguides is still possible. The sensor 102 detects enough light to record a satisfying picture of the waveguide ends. The transmittance of the optical system 103 is still good enough to indicate the waveguide ends. The user does not need to clean the optical system immediately in response to the outputted information signal. The user may operate the apparatus for some time and/or a certain quantity of splice processes after reception of the information signal and may be advised to clean the system. To clean or substitute the protection plates the protection plates are removable.

The state of contamination of the optical system which corresponds to the transmittance of light through the optical system may be determined by the compare unit by comparing the adjusted brightness of the light source with the determined brightness of the detected light after passing through the optical system. When the determined brightness of the detected light becomes lower in comparison to the adjusted brightness of the light source, this can be caused by an increase of contamination. The control unit 106 determines a value of brightness of the light detected by the sensor 102. The control unit 106 outputs a control signal to control the brightness of the light source 101 in response to said control signal. Said control signal is representative of an adjusted brightness of the light source 101. The compare unit 104 is configured to compare a value representative of the adjusted brightness with a value representative of the brightness detected by the sensor. By comparing the two values the compare unit 104 determines the state of contamination of the optical system 103.

Since the brightness of the light source may decrease as well due to aging of its components, the compare unit may accumulate the operation time of the light source and determine the transmittance in dependence on the operating time. The accumulated operating time can be compared with a stored model simulating the effect of aging and the decreasing of the brightness of the light source due to aging. Thus, the state of contamination of the optical system is determined in dependence on the effect of the decreasing brightness due to aging of the light source. By subtracting the loss of brightness caused by aging the compare unit can identify the decreasing of brightness caused by contamination. A decreasing of the detected brightness due to aging is not mistaken for a decreasing of the brightness of the light source due to contamination. When the compare unit detects a decreasing of the brightness, the compare unit is configured to identify whether the decreasing is caused by aging of the light source.

In a clean state of the optical system a third state of contamination may be determined which represents the contamination of a clean optical system. This third state of contamination may be used as a reference for determining the first and the second state of contamination of the optical system. Thus, the state of contamination representing the first and the second state of contamination is defined and stored by the apparatus individually. This may comprise recording a reference picture of a clean system or recording a reference value of the brightness of the light source, for example in response to a user input.

The transmittance through the optical system may be determined by the compare unit by using at least one method of image processing. The compare unit may compare a picture recorded by the image sensor with a reference picture. Image processing may include digital image processing, independent component analysis, pattern recognition, image analysis or image histogram analysis. It is apparent to a skilled person to use any other method of image processing and adapt it to determine the transmittance through the optical system and the state of contamination. At least one algorithm performed by a computer is used to perform the image processing.

The reference picture may be recorded at a clean state of the apparatus or may be stored by the compare unit. The clean state of the apparatus is a state of no or almost no contamination of the optical system. The reference picture may be recorded in response to an input of the user. In one embodiment the compare unit is configured to compare the gradient of a grey scale edge of the recorded picture with the gradient of the grey scale edge determined from the reference picture. The gradient of a grey scale edge may be determined at a region of the pictures where a waveguide is shown. A decreasing gradient of the grey scale edge determined from different subsequently recorded pictures is representative of an increasing contamination of the optical system. A plurality of gradients of different grey scale edges from different pictures may be determined. The different grey scale edges may be taken on a corresponding path through the respective pictures.

The compare unit may compare a distribution of the light intensity of the picture with the distribution of the light intensity determined from the reference picture. When the brightness in a plurality of regions of the picture becomes irregular between the regions, the compare unit outputs the information signal which indicates a contaminated state of the apparatus. To compare the recorded picture and the reference picture a plurality of values may be taken along a path through the respective pictures. The picture can be analyzed by the compare unit to recognize elements shown by the picture caused by contamination of the optical system 103. The background of the picture can be compared with the background of the reference picture. When the background of the picture contains, for example, dark coloured dots, the compare unit can indicate that these dots are a contamination of the optical system.

Figure 2 shows an adjusted brightness B of the light source 101 and a transmittance T through the optical system 103. It is a goal of the control loop in the system to keep the light which impinges at the sensor 102 almost constant. When the transmittance is decreasing the brightness of the light source 101 is adjusted brighter. The control unit 106 is configured to output a control signal which represents the detected light to adjust the brightness of the light source, said control signal controlling the light source.

When the optical system 103 becomes contaminated the sensor 102 detects less light at an adjusted brightness of the light source. In response to the detection a control signal is outputted to increase the brightness of the light source 101. The control signal which controls the light source represents an adjusted value of brightness. The compare unit is configured to compare the adjusted brightness with the brightness detected by the sensor. In a clean state of the optical system the adjusted brightness of the light source and the brightness of the detected light are quite similar. Due to contamination of the optical system 103 the brightness of the detected light becomes lower with respect to the adjusted brightness of the light source. When the brightness of the light detected by the sensor differs more than a given difference from the adjusted brightness of the light source the compare unit may output the information signal.

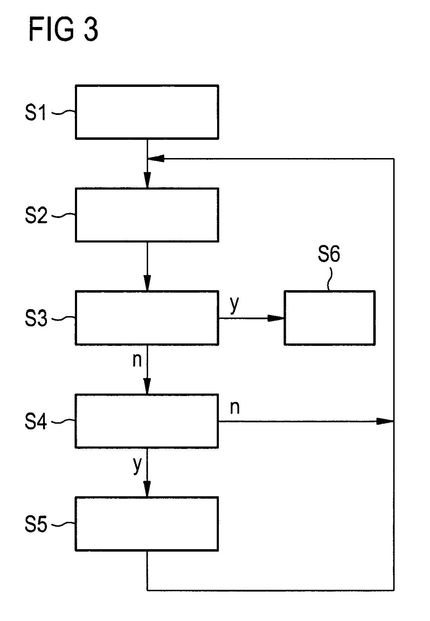

Figure 3 shows a flow chart of a method of operating a splice apparatus. In a first step S1 of the method the start is effected. The start is performed in response to the power-on of the apparatus for connecting optical waveguides. In another embodiment a state of contamination is determined in step S1 which represents a contamination of a clean optical system. For example, a reference picture is recorded. The ends of a first optical waveguide and a second optical waveguide may be inserted into the apparatus. In step S2 a transmittance through the optical system is determined. A picture is recorded in S2 and/or a brightness of detected light is determined.

In step S3 the values determined in step S2 are compared with a first state of contamination which represents a state of contamination for which it is judged that the apparatus may no longer connect optical waveguides in a satisfying way. Data which represent values of the first state of contamination may be stored by the compare unit. The transmittance through the optical system may be so low that it is not possible to compensate by adjusting the brightness of the light source. When the determined state of contamination is equal or worse than the first state of contamination, in step S6, the apparatus is prevented from connecting optical waveguides.

When it is determined in step S4 that the state of contamination of the optical system is better than the first state of contamination, the values determined in S2 are compared with a second state of contamination of the optical system. Data which represent values of the second state of contamination may be stored by the compare unit. When the state of contamination of the optical system is equal or worse than the second state of contamination, an information signal is outputted in step S5. The second state of contamination represents less contamination than the first state.

When the state of contamination of the optical system is better than the second state of contamination, the method continues with step S2. Step S4 may comprise comparison of brightnesses and/or image processing of a recorded picture and a reference picture. The state of contamination can be determined by the use of image processing, for example a comparison of grey scale edges. The state of contamination can be determined by comparing an expected brightness with a determined brightness. The determination may be in dependence on historical brightness detections. The expected brightness may be determined from a control signal which controls the light source.

When it is determined in step S3 that the state of contamination of the optical system is better than the first state of contamination, the method may continue with the process of preparing the optical waveguides to be fusion spliced. This process may comprise determining a core and/or a cladding of respective waveguide ends, positioning the waveguide ends in response to the determination and fusion splicing the waveguide ends.

Many modifications and other embodiments of the present invention, within the scope of the appended claims, will become apparent to a skilled artisan. Therefore, it is to be understood that the invention is not to be limited to the specific embodiments disclosed herein and that modifications and other embodiments may be made within the scope of the appended claims. Although specific terms are employed herein, they are used in a generic and descriptive sense only and not for purposes of limitation.

## Claims

1. A method for operating an apparatus for connecting optical waveguides (100), comprising:
- preventing the apparatus to connect optical waveguides in response to a determination of a first state of contamination of an optical system,
- outputting an information signal in response to a determination of a second state of contamination, the second state representing less contamination than the first state.

2. The method according to claim 1, comprising:
- adjusting a brightness of a light source (101), the light source (101) coupled optically to the optical system (103),
- detecting light which passes through the optical system (103),
- determining a brightness of the detected light,
- comparing the adjusted brightness with the determined brightness of the detected light to determine a transmittance through the optical system (103).

3. The method according to claim 2, comprising:
- accumulating the operation time of the light source (101),
- determining the transmittance in dependence on the operating time.

4. The method according to any of claims 1 to 3, comprising:
- recording a picture,
- comparing the picture with a reference picture to detect the state of contamination of the optical system.

5. The method according to claim 4, comprising:
- using at least one method of image processing to compare the picture with the reference picture.

6. The method according to claim 4 or 5, comprising:
- comparing a gradient of a grey scale edge of the picture with a gradient of a grey scale edge determined from the reference picture.

7. The method according to any of claims 4 to 6, comprising:
- comparing a distribution of the light intensity of the picture with a distribution of the light intensity determined from the reference picture.

8. The method according to any of claims 4 to 7, comprising:
- analyzing the picture to recognize elements shown by the picture caused by contamination of the optical system (103).

9. The method according to any of claim 1 to 8, comprising:
- determining a third state of contamination, the third state of contamination representing a contamination of a clean optical system (103),
- determining the second state of contamination of the optical system in dependence on third state of contamination.

10. The method according to any of claim 1 to 9, comprising:
- inserting respective ends of a first optical waveguide and a second optical waveguide into the apparatus,
- determining a core and/or a cladding of the respective optical waveguide ends,
- positioning the optical waveguide ends in response to the determination,
- fusion splicing the optical waveguide ends, when the detected state of contamination is better than the first state of contamination.

11. An apparatus for connecting optical waveguides (100), configured to execute the method according to any of claims 1 to 10.

12. The apparatus according to claim 11, comprising:
- a light source (101),
- a compare unit (104), the light source (101) coupled electronically with the compare unit (104) and the compare unit (104) configured to compare at least one determined state of contamination with at least one given reference value, the reference value representing a further state of contamination,
- a sensor (102) to detect light, the sensor (102) coupled optically with the light source (101) and the sensor coupled electronically with the compare unit (104),
- an optical system (103) arranged between the sensor (102) and the light source (101), the optical system at least partly removable to clean or substitute it.

13. The apparatus according to claim 11 or 12, comprising:
- a control unit (106) coupled electronically with the compare unit (104), the control unit (106) configured to output a signal which represents an adjusted brightness of the light source (101), said signal controlling the light source.

14. The apparatus according to claim 12 or 13, wherein the sensor (102) is an image sensor.

15. The apparatus according to any of claims 10 to 14, further comprising:
- positioning elements to position respective ends of a first optical waveguide and a second optical waveguide adjacent to each other,
- a heating device to heat the optical waveguides,
- the control unit being configured to determine the position of the core and/or the cladding of at least one of the optical waveguides.
